**Europäisches Patentamt**

**European Patent Office**

**Office européen des brevets**

(11) Numéro de publication : **0 457 397 B1**

# (12) FASCICULE DE BREVET EUROPEEN

(45) Date de publication du fascicule du brevet :
**18.10.95 Bulletin 95/42**

(51) Int. Cl.⁶ : **H04M 19/08**

(21) Numéro de dépôt : **91201110.3**

(22) Date de dépôt : **08.05.91**

(54) circuit pour réguler le courant de ligne dans un poste téléphonique.

(30) Priorité : **15.05.90 FR 9006036**

(43) Date de publication de la demande :
**21.11.91 Bulletin 91/47**

(45) Mention de la délivrance du brevet :
**18.10.95 Bulletin 95/42**

(84) Etats contractants désignés :
**DE FR GB IT SE**

(56) Documents cités :
**EP-A- 0 146 183**
**FR-A- 2 637 752**

(73) Titulaire : **PHILIPS COMPOSANTS**
**4, rue du Port aux Vins**
**F-92150 Suresnes (FR)**
(84) **FR**
Titulaire : **Philips Electronics N.V.**
**Groenewoudseweg 1**
**NL-5621 BA Eindhoven (NL)**
(84) **DE GB IT SE**

(72) Inventeur : **Coulmance, Jean-Pierre**
**Societe CIVILE S.P.I.D.,**
**156, Boulevard Haussmann**
**F-75008 Paris (FR)**
Inventeur : **Bailly, Patrick**
**Societe CIVILE S.P.I.D.,**
**156, Boulevard Haussmann**
**F-75008 Paris (FR)**

(74) Mandataire : **Pinchon, Pierre et al**
**Société Civile S.P.I.D.**
**156, Boulevard Haussmann**
**F-75008 Paris (FR)**

## Description

La présente invention concerne un circuit pour un poste téléphonique qui comporte un module intégré d'amplification et de régulation de tension inséré entre une première et une seconde portions terminales de ligne lesquelles sont raccordées à une diagonale d'un pont redresseur tandis que sur l'autre diagonale de ce pont est branchée une ligne téléphonique, ledit module comportant pour sa part une borne d'alimentation, une borne de modulation à coupler à la première portion terminale de ligne, et une borne de référence à coupler à la seconde portion terminale de ligne prise comme tension de référence, via au moins un élément résistif de mesure du courant de ligne,

ledit poste téléphonique assurant par ailleurs une régulation du courant de ligne au moyen d'un premier transistor, à effet de champ et/ou bipolaire à gain élevé, dont l'électrode de commande est alimentée par une résistance de polarisation et dont le circuit principal de courant, inséré dans la branche située entre les première et seconde portions terminales de ligne et contenant le module intégré d'amplification et de régulation, est susceptible d'introduire une chute de tension dans cette branche sous la commande d'un deuxième transistor dont la base reçoit la tension développée sur l'élément résistif de mesure de courant après filtrage par un filtre passe-bas et dont le collecteur est relié à la résistance de polarisation du premier transistor.

Un tel circuit pour poste téléphonique est connue du document EP-A-0 146 183 qui vise plus particulièrement à mettre en oeuvre un circuit intégré assurant les principales fonctions d'émission, de reception et de régulation de tension d'alimentation propre, par exemple un circuit intégré commercialisé sous la référence TEA 1060 (ou ses dérivés) par la société PHILIPS.

Du fait que les normes auxquelles les postes téléphoniques doivent satisfaire évoluent relativement fréquemment et que, de plus, ces normes diffèrent sensiblement selon les pays, il n'est pas possible de prévoir des circuits totalement intégrés assurant toutes les fonctions de base d'un poste téléphonique sans y ajouter des composants externes permettant d'ajuster le fonctionnement pour tenir compte des réglements particuliers qui s'appliquent sur le territoire d'utilisation.

Il est bien connu que par l'intégration de fonctions de plus en plus complexes au sein de circuits fabriqués en grande série on aboutit à une réduction considérable du prix de revient des appareils, tant du point de vue des composants constitutifs que du point de vue du temps de mains d'oeuvre nécessaire à l'assemblage. Quand il est indispensable d'adjoindre des composants externes à un circuit intégré, comme c'est le cas dans un poste téléphonique pour la raison qui vient d'être indiquée, il se pose le problème d'opérer un choix technique aussi judicieux que possible permettant de limiter au minimum la quantité et le prix des composants externes. Néanmoins, il faut conserver la possibilité de fixer avec précision les conditions de fonctionnement souhaitées dans telle ou telle circonstance, au moyen de ces composants.

Du fait que la longueur de la ligne de raccordement d'un poste téléphonique peut varier dans de grandes proportions, le courant de ligne qui s'établit au moment du décrochage peut également varier dans de grandes proportions et c'est pourquoi il est fréquent que les normes exigent que ce courant soit limité à une valeur maximale, au cas où la ligne est très courte, en vue d'éviter une perte d'énergie inutile et nuisible, de plus, au fonctionnement de certains autocommutateurs. Le circuit qui assure une telle limitation de courant de ligne, ou une régulation de ce courant, exige la présence d'un certain nombre de composants externes, d'une part en raison des tensions relativement élevées auxquelles ces composants peuvent être soumis (et notamment ledit premier transistor, interposant une chute de tension dans la ligne qui peut être plus élevée que la tension admissible sur un circuit intégré de technologie courante) ainsi que d'autres composants associés comme des résistances dont la valeur doit pouvoir être choisie à volonté pour fixer la limite de courant requise par la norme à respecter.

La disposition de circuit décrite dans le document cité requiert un nombre relativement élevé de composants externes et conduit donc à une construction de postes téléphoniques dont le fonctionnement est certes techniquement satisfaisant mais pour lesquels il serait souhaitable de pouvoir abaisser le prix de revient.

L'invention a donc notamment pour but d'apporter un perfectionnement à la disposition de circuit de l'art antérieur connu qui permette une plus grande intégration des composants au sein de circuits intégrés et ne laisse en tant que composants externes que le strict minimum indispensable pour obtenir les réglages requis par les normes en vigueur qui sont le plus souvent variables d'un pays à l'autre.

A cet effet, selon l'invention, un circuit pour un poste téléphonique est défini par les caractéristiques de la revendication 1.

Le premier transistor est un transistor à effet de champ, un équivalent bipolaire c'est-à-dire un transistor à gain élevé notamment un transistor Darlington, ou une combinaison de transistors à effet de champ et bipolaire. Le fait que le trajet principal de courant de ce premier transistor est inséré entre la première portion terminale de ligne et la borne de modulation du module intégré d'amplification et de régulation apporte l'avantage que les tensions maximales appliquées à ce module sont peu élevées par rapport à la tension de référence

2

et qu'ainsi, le deuxième transistor ainsi que la diode de compensation et la source de courant alimentant le point de jonction entre la base de ce deuxième transistor et la diode de compensation peuvent être intégrés dans le module d'amplification et de régulation et conduit donc à une économie substantielle.

Par ailleurs le circuit selon l'invention a un comportement sensiblement différent de celui du circuit connu du fait que l'émetteur du deuxième transistor est connecté à une source de tension d'impédance finie, dont la valeur peut être choisie à volonté par des composants externes, et forme avec la résistance de polarisation du premier transistor une amplification linéaire en tension. Celle-ci produit sur la résistance de polarisation du premier transistor une chute de tension proportionnelle à la tension continue développée sur l'élément résistif de mesure de courant lorsque celle-ci dépasse un seuil qui est fixé par la source de tension de seuil à impédance interne déterminée. L'invention offre l'avantage qu'une évaluation de la longueur de la ligne peut être simplement effectuée au moyen de la mesure du courant de ligne (tension développée sur l'élément résistif de mesure de courant) ainsi, l'atténuation entraînée par la longueur de ligne peut être compensée aisément au sein du module intégré d'amplification et de régulation.

Un premier mode de mise en oeuvre de l'invention est caractérisé en ce que la source de tension de seuil est constituée par un générateur de tension d'impédance interne faible dont les bornes de sortie sont reliées entre elles par un pont diviseur à deux résistances le point intermédiaire de ce pont diviseur constituant la sortie à impédance déterminée de la source de tension de seuil. Dans une mise en pratique préférée ledit générateur de tension est un montage dit "band gap" bien connu des spécialistes du domaine, fournissant une tension stable de 1,2 V laquelle au moyen d'un pont diviseur à deux résistances peut être ramenée par exemple à une tension de seuil de l'ordre de 0,6 V dont l'impédance sera fixée par la valeur des deux résistances du pont mises en parallèle. Ici encore le générateur de tension "band gap" peut aisément être intégré dans le module intégré d'amplification et de régulation.

Dans un deuxième mode de mise en oeuvre de l'invention, ladite source de tension de seuil est constituée d'une part par une résistance connectée entre l'émetteur du deuxième transistor et la tension de référence et d'autre part par une source de courant, dite de seuil, alimentant la résistance précitée à partir de la borne d'alimentation. Dans ce cas, la résistance en question peut être un composant externe de manière à pouvoir choisir l'impédance interne de la source de tension de seuil. La source de courant qui l'alimente peut cependant être intégrée avantageusement dans le module intégré.

Avantageusement, l'élément résistif de mesure de courant étant constituée de deux résistances de mesure en série, la base d'un troisième transistor est connectée au point commun entre les deux résistances de mesure de courant, son émetteur connecté à la seconde portion terminale de ligne, et son collecteur connecté à l'électrode de commande du premier transistor. A l'aide de ce troisième transistor, la fonction de protection du poste téléphonique en cas de surcharge accidentelle de la ligne est assurée par le fait que lorsque la tension de seuil du troisième transistor est dépassée, celui-ci ramène l'électrode de commande du premier transistor à une tension proche de la tension de référence, la surcharge accidentelle étant absorbée par la chute de tension du premier transistor.

Là encore, ce troisième transistor peut être intégré dans le module intégré.

Une autre fonction consistant à interrompre le courant de ligne notamment pendant la numérotation, fonction dite d'ouverture de boucle, peut être assurée aisément selon le circuit de l'invention par le fait qu'un quatrième transistor recevant sur sa base des impulsions de commande pour l'ouverture de boucle, l'émetteur de ce quatrième transistor est connecté à la tension de référence et son collecteur connecté à l'électrode de commande du premier transistor. A nouveau, ce quatrième transistor est aisément intégrable.

Une variante d'exécution du circuits selon l'invention est caractérisée en outre en ce que ledit filtre passe-bas étant constitué par une résistance de filtrage, connectée entre la borne de référence du module intégré et la diode de compensation, et par un condensateur de filtrage dont une extrémité est connectée au point commun entre la résistance de filtrage et la diode de compensation, l'autre extrémité de ce condensateur est reliée à la tension de référence via le trajet principal de courant d'un cinquième transistor, dit transistor interrupteur, recevant sur son électrode de commande les impulsions de commande d'ouverture de boucle, la polarité de ce transistor interrupteur étant choisie pour assurer une coupure de la liaison du condensateur de filtrage vers la tension de référence en synchronisme avec l'ouverture de boucle.

Cette variante offre l'avantage de supprimer les transitoires de charge et de décharge du condensateur de filtrage lors de l'opération d'ouverture de boucle.

La description qui va suivre en regard des dessins annexés fera bien comprendre comment l'invention peut être réalisée.

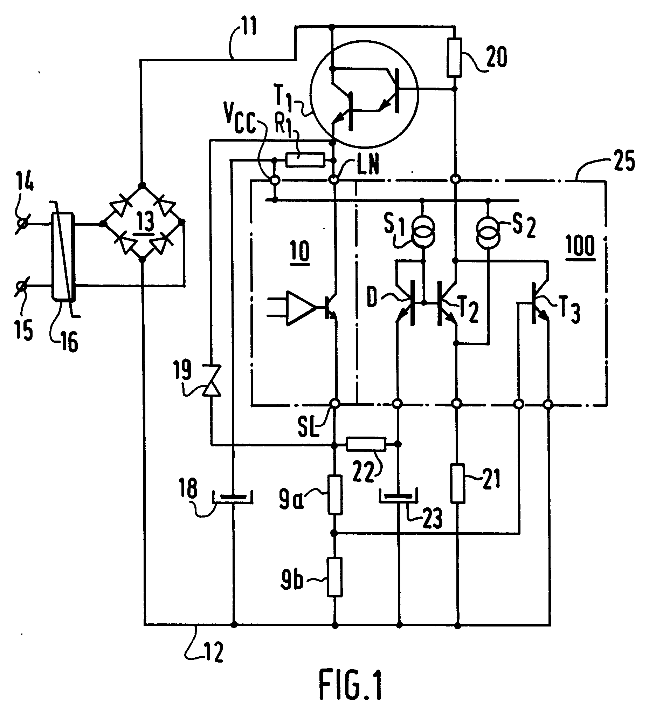

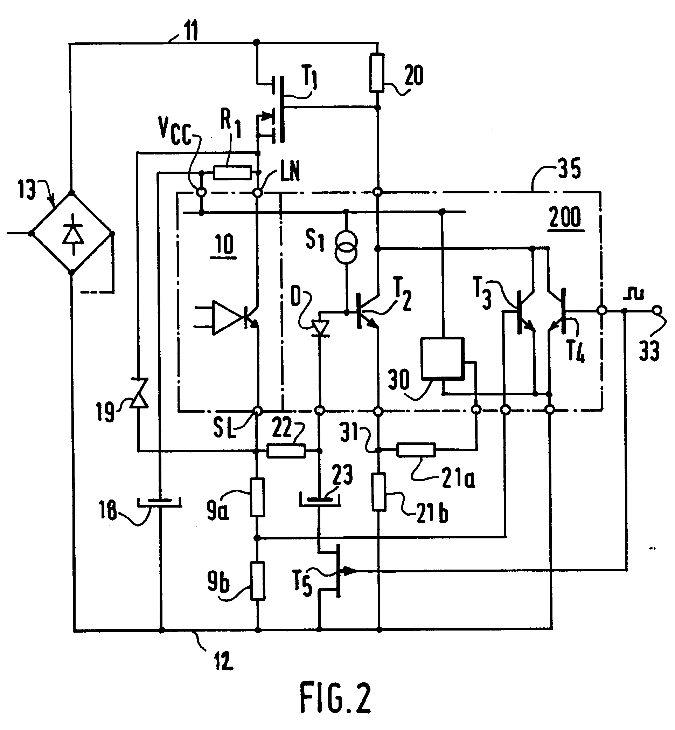

La figure 1 représente un schéma du circuit selon l'invention dans un premier exemple de réalisation et la figure 2 représente le schéma d'un deuxième exemple de réalisation du circuit selon l'invention qui inclut une fonction d'ouverture de boucle.

Sur la figure 1 à été représenté le schéma simplifié d'un poste téléphonique comportant un module intégré

3

d'amplification et de régulation de tension 10 qui est inséré entre une première portion terminale de ligne 11, une seconde portion terminale de ligne 12, lesquelles sont raccordées à une diagonale d'un pont redresseur 13 recevant sur son autre diagonale les deux fils de la ligne téléphonique par les bornes 14 et 15 à travers un élément passif de protection 16. Le module intégré d'amplification et de régulation 10 comporte entre autres une borne de modulation LN, une borne de référence SL et une borne d'alimentation Vcc qui est reliée d'une part à la borne LN par une résistance $R_1$ de l'ordre de 600 ohms et d'autre part à la seconde portion terminale de ligne 12 par un condensateur réservoir 18.

Le module intégré 10 assure notamment une fonction de régulation de tension par absorption de courant sur la ligne de sorte que, en prenant la seconde portion terminale de ligne 12 comme tension de référence, la tension présentée par la borne LN soit comprise entre 4 et 5 Volts environ. A partir de la tension de la borne LN, qui comporte une composante continue ainsi qu'un signal de modulation, on produit une tension continue sur la borne Vcc au moyen de la résistance $R_1$, qui est stabilisée par le condensateur 18, et qui sert à l'alimentation du module intégré 10. Une diode Zener 19, est connectée entre les bornes LN et SL limitant la tension à 8,2 V par exemple pendant la phase transitoire du décrochage.

La borne de référence SL du module intégré 10 est couplée à la seconde portion terminale de ligne 12 via un élément résistif de mesure de courant constitué par deux résistances 9a et 9b en série. Il est prévu que la chute de tension continue sur l'ensemble des deux résistances 9a et 9b ne dépasse pas 1,2 V. Cette chute de tension par rapport à la tension de référence permet notamment de corriger le gain des amplificateurs de modulation entre certaines limites de manière à tenir compte de la longueur de la ligne téléphonique, d'une manière connue en soi et décrite dans le manuel d'utilisation du circuit intégré TEA 1060 et ses dérivés, publié par le constructeur de ces circuits intégrés.

La borne de modulation LN, du module intégré 10, est destinée à être couplée à la première portion terminale de ligne 11. Toutefois, du fait que le module 10 est prévu pour créer entre ses bornes une tension fixe de l'ordre de 3 à 4,2 Volts, par absorption du courant de ligne à la manière d'une diode Zener, certaines réglementations et notamment la norme française, imposent une limitation de courant de ligne et en particulier lorsque la ligne est courte.

C'est pourquoi on prévoit, un circuit de régulation de ligne qui comporte un premier transistor $T_1$ dont le trajet principal de courant est interposé dans la boucle entre la première et la seconde portion terminale de ligne 11, 12, transistor $T_1$ destiné à interposer une chute de tension dans la ligne et permet ainsi de réguler le courant de ligne. Dans l'exemple représenté à la figure 1, le premier transistor $T_1$, est un transistor Darlington, dont le trajet principal de courant est inséré entre la première portion terminale de ligne 11 et la borne de modulation LN. L'éléctrode de commande du premier transistor $T_1$ est alimentée à partir de la première portion terminale de ligne 11 par une résistance de polarisation 20 et procure la conduction de ce transistor dès que la ligne téléphonique est alimentée à une tension supérieure à la tension de seuil du premier transistor $T_1$, augmenté de la tension de déblocage du pont de diodes 13.

Le circuit de régulation de courant de ligne comporte également un deuxième transistor $T_2$ dont le collecteur est connecté au point de jonction entre la résistance de polarisation 20 et l'électrode de commande du premier transistor $T_1$, et l'émetteur est connecté à la tension de référence via une résistance d'émetteur 21. La base du deuxième transistor $T_2$ est couplée à la borne de référence SL au moyen d'une diode de compensation D, représentée sur la figure par un transistor connecté en diode, et un filtre passe-bas composé d'une résistance série 22 et d'un condensateur de filtrage 23 de découplage vers la tension de référence. La base du deuxième transistor $T_2$ est alimentée à partir de la tension Vcc au moyen d'une source de courant $S_1$. Le circuit de régulation de courant de ligne est enfin complété par une source de courant $S_2$ dite source de courant de seuil qui alimente la résistance d'émetteur 21 du deuxième transistor $T_2$ à partir de la tension Vcc.

Le fonctionnement du circuit de régulation de courant de ligne peut être expliqué de la manière suivante.

Dans le filtre passe-bas 22, 23, on choisit une valeur de résistance 22 qui compte tenu du courant faible procuré par la source de courant $S_1$ produit une chute de tension sur cette résistance qui peut être négligée. L'ensemble formé par la diode de compensation D et le deuxième transistor $T_2$ forme un circuit de comparaison qui reproduit sur l'émetteur du deuxième transistor $T_2$ une tension continue qui est très sensiblement égale à la valeur de la tension continue existant sur la borne de référence SL du module intégré d'amplification et de régulation 10.

Deux cas doivent être considérés :
- lorsque la tension continue présentée par la borne de référence SL est inférieure à la tension de seuil produite par le courant de la source de courant de seuil $S_2$ sur la résistance d'émetteur 21, le courant de la source du courant $S_1$ s'écoule par la diode de compensation D et le deuxième transistor $T_2$ n'est pas conducteur. Dans ce cas, le premier transistor $T_1$ est alimenté et reste conducteur. Ce cas correspondrait à une ligne téléphonique très longue où la chute de tension serait si importante qu'il ne serait pas nécessaire de produire une chute de tension supplémentaire au moyen du premier transistor $T_1$.

- dans le deuxième cas, qui est en fait le cas le plus général, la tension continue de la borne de référence SL est supérieure à la tension de seuil développée sur la résistance 21 par la source de courant de seuil $S_2$. Le deuxième transistor $T_2$ fournit alors l'appoint de courant nécessaire pour que sa tension d'émetteur se rapproche de la tension continue de la borne de référence SL. Le courant collecteur du deuxième transistor $T_2$, produit une chute de tension dans la résistance de polarisation 20 du premier transistor $T_1$ laquelle entraîne à son tour un accroissement de tension équivalent dans le circuit principal de courant de ce transistor. En définifive, les conditions d'équilibre pour une ligne téléphonique déterminée, peuvent s'écrire selon la relation :

$$\Delta V_{T1} = \Delta V_{SL} \cdot \frac{R_{20}}{R_{21}}$$

relation dans laquelle $\Delta V_{T1}$ représente l'accroissement de chute de tension dans le premier transistor $T_1$ au-delà de sa tension de seuil (1,2 volt environ pour un transistor Darlington), $\Delta V_{SL}$ représente l'accroissement de tension de la borne de référence SL dûe au courant de ligne mesuré par les résistances de mesure de courant 9a et 9b, et $R_{20}/R_{21}$ représente le rapport des valeurs de résistances des résistances 20 et 21 respectivement.

$V_0$ étant la tension de seuil à laquelle le circuit se réfère et qui est fournie par la chute de tension dans la résistance 21 dûe au courant de la source de courant de seuil $S_2$, cette tension $V_0$ possède une résistance interne dont la valeur peut être choisie au moyen de la résistance 21 tandis que la pente des variations de tension aux bornes du transistor $T_1$ en fonction de la variation de tension sur la borne de référence SL peut être choisie au moyen de la résistance de polarisation 20.

Le circuit de régulation de courant de ligne associé au module intégré d'amplification et de régulation de tension 10 possède une caractéristique de courant en fonction de la tension de ligne qui présente une première partie correspondant au fait que le deuxième transistor $T_2$ n'est pas conducteur et permet la conduction du premier transistor $T_1$ dès que son seuil propre est dépassé. L'ensemble présente dans cette partie de tensions de ligne faibles, une impédance interne très faible, puis au-delà d'un coude correspondant à la mise en conduction du deuxième transistor $T_2$, pour un accroissement de tension de la ligne, l'accroissement du courant absorbé par l'ensemble des circuits varie linéairement avec la tension de ligne selon le facteur $(1/R_9) \cdot (R_{21}/R_{20})$, expression dans laquelle $R_9$ représente la somme des valeurs des résistances 9a et 9b. Après s'être fixé un courant délivré par la source de courant de seuil $S_2$ on peut encore modifier à volonté la position du coude de la caractéristique courant-tension du circuit en modifiant la valeur de la résistance 21, ainsi que la pente de régulation de courant de ligne par la proportion des résistances 9a, 9b, 21 et 20.

Comme indiqué sur la figure 1, le circuit selon l'invention peut également fournir très simplement une fonction supplémentaire de protection contre les surcharges accidentelles sur la ligne téléphonique au moyen d'un troisième transistor $T_3$ dont l'émetteur est relié à la tension de référence, le collecteur relié à l'électrode de commande du premier transistor $T_1$, et la base reliée au point milieu du pont formées par les deux résistances 9a et 9b constituant l'élément résistif de mesure de courant de ligne. Les valeurs individuelles des résistances 9a et 9b sont choisies de telle sorte que pour une valeur de courant limite et accidentel de la ligne, le seuil de conduction du troisième transistor $T_3$ est dépassé ce qui a pour effet d'abaisser l'électrode de commande du premier transistor $T_1$ vers la tension de référence, et provoque ainsi une chute de tension élevée dans le premier transistor $T_1$ protégeant ainsi l'ensemble de la disposition de circuit tant que la surcharge persiste.

En dehors du premier transistor $T_1$ et de sa résistance de polarisation 20 le reste de la disposition du circuit décrite dans l'exemple est soumis à des tensions continues par rapport à la tension de référence présentée par la seconde portion terminale de ligne 12, qui sont peu élevées, de l'ordre de 5 à 6 volts seulement, de sorte qu'une large proportion des éléments constitutifs de cette disposition de circuit peuvent être maintenant intégrées en même temps et dans le même circuit que le module intégré d'amplification et de régulation 10. Ceci a été représenté symboliquement sur la figure 1 par le cadre en trait mixte 25 entourant une portion de circuit 100 qui comprend les sources de courant $S_1$ et $S_2$ ainsi que la diode D et les transistors $T_2$ et $T_3$, ces éléments étant intégrés.

Les composants externes au circuit intégré, qui pour la plupart, servent à fixer les conditions de fonctionnement du circuit décrit, peuvent, à titre indicatif, avoir les valeurs données ci-après :

EP 0 457 397 B1

| Résistances | | | Condensateurs | |
| --- | --- | --- | --- | --- |
| réf. | valeur | | réf. | valeur |
| | (ohms) | | | (µFarads) |
| $R_1$ | 620 | | | |
| 9a | 15 | | 18 | 100 |
| 9b | 5 | | 23 | 6,8 |
| 20 | 330K | | | |
| 21 | 5,6K | | | |
| 22 | 15K | | | |

En utilisant un premier transistor $T_1$ dont le gain en courant est de l'ordre de 10 000, une source de courant $S_1$ débitant 2,5µA, une source de courant de seuil $S_2$ débitant 100µA, la disposition de circuit décrite procure un coude de caractéristique qui se situe à un courant de ligne de 28mA, pour une tension de ligne (sur les bornes 14 et 15, avant le pont de diodes 13) voisine de 8,3 volts. Pour une tension de ligne supérieure à cette valeur de coude, la disposition de circuit présente une impédance interne apparente de 1200ohms environ, qui procure une augmentation linéaire du courant de ligne en fonction de la tension de ligne. Par exemple, un courant de ligne de 55mA est atteint pour une tension de ligne de 40 Volts.

La figure 2 représente un deuxième exemple d'un circuit selon l'invention. La structure de ce circuit reprend un certain nombre d'éléments du circuit de la figure 1 qui sont affectés des mêmes signes de référence et dont l'agencement ne sera pas décrit à nouveau.

Une première différence du circuit de la figure 2 par rapport au circuit de la figure 1 réside dans la manière d'obtenir la tension de seuil permettant de fixer le coude de la caractéristique courant de ligne-tension de ligne. Elle est réalisée ici au moyen d'un générateur de tension 30 du type dit "band gap" qui délivre une tension d'environ 1,2 volt très stable, compensée en température, sur une première extrémité d'une résistance 21a laquelle a son autre extrémité reliée à l'émetteur du deuxième transistor $T_2$. L'émetteur du deuxième transistor $T_2$ est relié à la tension de référence via une résistance 21b de sorte que le point de jonction 31 entre les résistances 21a et 21b présente une tension de seuil qui peut être déterminée par le rapport des résistances 21a et 21b tandis que l'impédance interne de cette source de tension, vue de l'émetteur du deuxième transistor $T_2$, est égale à la résistance équivalente aux résistances 21a et 21b en parallèle.

La fonction de protection du poste téléphonique en cas de surcharge sur la ligne est réalisé de la même manière que dans le premier exemple au moyen d'un troisième transistor $T_3$ connecté et fonctionnant de la même manière. Le premier transistor $T_1$ est, dans le présent exemple, un transistor à effet de champ de type MOS, à canal N, travaillant en mode d'enrichissement ou en mode d'apprauvrissement. Si on choisit un transistor fonctionnant en mode d'enrichissement, il est préférable que sa tension de seuil soit la plus faible possible, par exemple de l'ordre 1,5 Volt seulement.

Sur le schéma donné en exemple à la figure 2, on a indiqué comment une fonction d'interruption de courant de ligne, notamment pendant la numérotation, peut être réalisée très facilement avec la disposition du circuit de l'invention. Cette fonction est assurée par un quatrième transistor $T_4$, dont la base reçoit par une borne 33 des impulsions de commande d'ouverture de boucle, dont l'émetteur est relié à la tension de référence, et dont le collecteur est relié à l'électrode de commande du premier transistor $T_1$. Lors d'une impulsion de commande positive sur la base du quatrième transistor $T_4$, ce transistor est conducteur et amène à la tension de référence l'électrode de commande du premier transistor $T_1$, ce qui à pour effet de bloquer ce transistor, de sorte qu'il ne subsiste plus aux bornes de la ligne, que la résistance de polarisation 20. Celle-ci est choisie d'une valeur suffisamment élevée pour satisfaire aux exigences du courant maximal en phase d'ouverture de boucle.

La figure 2 présente un perfectionnement selon l'invention permettant d'obtenir des impulsions d'ouverture et fermeture de boucle, sur la ligne téléphonique, qui présentent une amplitude constante. Ce perfectionnement consiste à introduire un cinquième transistor $T_5$, dit transistor interrupteur, dont le trajet principal de courant est interposé entre le condensateur 23 et la tension de référence. Ce cinquième transistor $T_5$ a pour but d'assurer une liaison conductrice entre le condensateur 23 et la tension de référence en fonctionnement normal, tandis que cette liaison est interrompue lors d'une impulsion d'ouverture de boucle. De la sorte, le condensateur 23 ne subit aucune variation de charge pendant la phase d'interruption, le courant de ligne reprenant la même valeur que celle exsistant avant une interruption. Le cinquième transistor $T_5$ peut être couplé à la borne de commande d'ouverture de boucle 33 de toute manière convenable pour assurer la fonction indiquée. Toutefois, la solution la plus simple consiste à relier directement l'électrode de commande du cinquième transistor $T_5$ à la borne de commande 33 en choisissant à cet effet un transistor à effet de champ à canal P (JFET).

De même que sur la figure 1, on a symbolisé dans le deuxième exemple de la figure 2 le fait qu'un certain nombre d'éléments peuvent être intégrés avec le module intégré d'amplification et de régulation 10, par un cadre en trait mixte 35 délimitant une portion de circuit 200 incluant les éléments qui sont intégrés de préférence, à savoir : la diode D, la source de courant $S_1$, les transistors $T_2$, $T_3$ et $T_4$, et le générateur de tension 30.

Il est facile de comprendre que les composants demeurant à l'extérieur du circuit intégré 10, 200 sont ceux qui permettent le réglage des caractéristiques de fonctionnement du poste téléphonique ainsi que les composants tels que le premier transistor $T_1$, le cinquième transistor $T_5$ et les condensateurs 18 et 23 qui ne sont pas intégrables pour des raisons technologiques.

La fonction de régulation du courant de ligne peut aisément être annulée, si on le désire. Il suffit de supprimer les résistances 22 et 21b, de remplacer le condensateur 23 et le transistor $T_5$ par une liaison directe entre la diode D et la tension de référence, et de connecter directement la sortie du générateur de tension 30 à l'émetteur du deuxième transistor $T_2$.

## Revendications

1. Circuit pour un poste téléphonique qui comporte un module intégré (10) d'amplification et de régulation de tension inséré entre une première (11) et une seconde (12) portions terminales de ligne lesquelles sont raccordées à une diagonale d'un pont redresseur (13) tandis que sur l'autre diagonale de ce pont est branchée une ligne téléphonique (14, 15), ledit module comportant pour sa part une borne d'alimentation (Vcc), une borne de modulation (LN) à coupler à la première portion terminale de ligne (11), et une borne de référence (SL) à coupler à la seconde portion terminale de ligue (12), prise comme tension de référence, via au moins un élément résistif (9) de mesure du courant de ligne, ledit poste téléphonique assurant par ailleurs une régulation du courant de ligne au moyen d'un premier transistor (T1), à effet de champ et/ou bipolaire à gain élevé, dont l'électrode de commande est alimentée, en vue de la conduction de ce transistor, par une résistance de polarisation (20), et dont le circuit principal de courant, en série avec le module intégré (10) dans la branche située entre les première et seconde portions terminales de ligne, est susceptible d'introduire une chute de tension dans cette branche sous la commande d'un deuxième transistor (T2) dont la base reçoit la tension développée sur l'élément résistif (9) de mesure de courant, après filtrage par un filtre passe-bas et dont le collecteur est relié à la résistance de polarisation (20) du premier transistor (T1),

   caractérisé en ce que le deuxième transistor (T2) a sa base reliée à la sortie du filtre passe-bas (22, 23) via une diode de compensation (D) polarisée en direct par une source de courant (S1) à partir de la borne d'alimentation (Vcc), et a son émetteur connecté à une source de tension de seuil (21, S2), (21a, 21b, 30) qui est connectée par ailleurs à la tension de référence, source de tension dont l'impédance interne est fixée pour réaliser une régulation linéaire du courant de ligne en fonction de la chute de tension dans le premier transistor, et en ce que le deuxième transistor (T2), la diode de compensation (D) et la source de courant (S1) sont susceptibles d'être incorporés dans le module intégré (10) du fait que le trajet principal de courant du premier transistor (T1) est situé entre la première portion terminale (11) de ligne et la borne de modulation (LN), la résistance de polarisation (20) étant alimentée à partir de cette première portion terminale (11).

2. Circuit selon la revendication 1, caractérisé en ce que ladite source de tension de seuil est constituée par un générateur de tension (30), d'impédance interne faible, dont les bornes de sortie sont reliées entre elles par un pont diviseur à deux résistances (21a, 21b), le point intermédiaire de ce pont diviseur constituant la sortie à impédance déterminée de ladite source de tension de seuil.

3. Circuit selon la revendication 1, caractérisée en ce que ladite source de tension de seuil est constituée d'une part par une résistance (21) connectée entre l'émetteur du deuxième transistor (T2) et la deuxième portion terminale (12) de ligne, et d'autre part par une source de courant (S2), dite de seuil, alimentant la résistance précitée à partir de la borne d'alimentation (Vcc).

4. Circuit selon l'une des revendications 1 à 3, caractérisé en ce que l'élément de mesure de courant étant constitué de deux résistances de mesure (9a, 9b) en série, la base d'un troisième transistor (T3) est connectée au point commun entre les deux résistances de mesure de courant, son émetteur connecté à la seconde portion terminale de ligne (12), et son collecteur connecté à l'électrode de commande du premier transistor (T1).

5. Circuit selon l'une des revendications 1 à 4, caractérisée en ce qu'un quatrième transistor (T4) recevant sur sa base des impulsions de commande pour l'ouverture de boucle de la ligne téléphonique, l'émetteur de ce quatrième transistor est connecté à la seconde portion terminale (12) de ligne et son collecteur, connecté à l'électrode de commande du premier transistor (T1).

6. Circuit selon la revendication 5, caractérisé en ce que ledit filtre passe-bas étant constitué par une résistance de filtrage (22), connectée entre la borne de référence (SL) du module intégré et la diode de compensation (D), et par un condensateur de filtrage (23) dont une extrémité est connectée au point commun entre la résistance de filtrage et la diode de compensation, l'autre extrémité de ce condensateur est reliée à la tension de référence via le trajet principal de courant d'un cinquième transistor (T5), dit transistor interrupteur, recevant sur son électrode de commande des impulsions de commande d'ouverture de boucle, la polarité de ce transistor interrupteur (T5) étant choisie pour assurer une coupure de la liaison du condensateur de filtrage vers la tension de référence en synchronisme avec l'ouverture de boucle.

## Patentansprüche

1. Schaltungsanordnung für einen Telefonapparat mit einem integrierten Spannungsverstärkungs- und -regelungsmodul (10) zwischen einem ersten (11) und einem zweiten (12) Leitungsendteil, wobei diese Teile mit einer Diagonalen einer Gleichrichterbrücke (13) verbunden sind, während eine Telefonleitung (14, 15) mit der anderen Diagonalen dieser Brücke verbunden ist, wobei dieses Modul an sich einen Speiseanschluß ($V_{cc}$), einen Modulationsanschluß (LN) zur Kopplung an den ersten Leitungsendteil (11) und einen als Bezugsspannung gewählten Bezugsanschluß (SL) zur Kopplung an den zweiten Leitungsendteil (12) aufweist, über wenigstens ein Widerstandelement (9) zur Messung des Leitungsstromes, wobei der Telefonapparat, der weiterhin eine Leitungsstromregelung gewährleistet mittels eines ersten Feldeffekttransistors ($T_1$) und/oder eines ersten bipolaren Hochverstärkungstransistors, dessen Steuerelektrode über eine Polarisationswiderstand (20) gespeist wird und dessen Hauptstromstrecke in dem Zweig zwischen dem ersten und dem zweiten Leitungsendteil liegt und das integrierte Verstärkungs- und -regelungsmodul (10) aufweist, empfindlich ist für die Einführung eines Spannungsabfalls in diesen Zweig unter Ansteuerung eines zweiten Transistors ($T_2$), dessen Basis die an dem Widerstandselement (9) zur Messung der Spannung entwickelte Spannung erhält nach Filterung über Tiefpaßfilter und dessen Kollektor mit dem Polarisationswiderstand (20) des ersten Transistors ($T_1$) verbunden ist, dadurch gekennzeichnet, daß der zweite Transistor ($T_2$) über eine direkt durch eine Stromquelle ($S_1$) von der Speisequelle ($V_{cc}$) polarisierte Ausgleichsdiode (D) mit seiner Basis mit dem Ausgang des Tiefpaßfilters (22, 23) verbunden ist und mit seinem Emitter mit einer Schwellenspannungsquelle (21, $S_2$), (21a, 21b, 30) verbunden ist, die andererseits mit der Bezugsspannung verbunden ist, wobei die innere Impedanz der Spannungsquelle festliegt zur Verwirklichung einer linearen Regelung des Leitungsstromes als Funktion des Spannungsabfalls in dem ersten Transistor, und daß der zweite Transistor ($T_2$), die Ausgleichsdiode (D) und die Stromquelle ($S_1$) in dem integrierten Modul (10) einverleibt werden können wegen der Tatsache, daß die Hauptstromstrecke des ersten Transistors ($T_1$) zwischen dem ersten Leitungsendteil (11) und der Modulationsklemme (LN) liegt, wobei der Polarisationswiderstand (20) aus diesem ersten Endteil (11) gespeist wird.

2. Schaltungsanordnung nach Anspruch 1, dadurch gekennzeichnet, daß die Schwellenspannungsquelle durch einen Spannungsgenerator (30) mit einer niedrigen inneren Impedanz gebildet wird, dessen Ausgangsklemmen durch eine Teilerbrücke aus zwei Widerständen (21a, 21b) miteinander verbunden sind, während der Punkt in der Mitte dieser Teilerbrücke den Schwellenspannungsquellenausgang mit einer spezifischen Impedanz bildet.

3. Schaltungsanordnung nach Anspruch 1, dadurch gekennzeichnet, daß die genannte Schwellenspannungsquelle einerseits durch einen zwischen dem Emitter des zweiten Transistors ($T_2$) und dem zweiten Leitungsendteil (12) vorgesehenen Widerstand (21) und andererseits durch eine als Schwellenstromquelle bezeichnete Spannungsquelle ($S_2$) gebildet ist, die den obengenannten Widerstand von der Speiseklemme ($V_{cc}$) her speist.

**4.** Schaltungsanordnung nach Anspruch 1 bis 3, _dadurch gekennzeichnet_, daß das Strommeßwiderstandselement durch zwei reihengeschaltete Meßwiderstände (9a, 9b) gebildet ist, wobei die Basis eines dritten Transistors ($T_3$) mit einem gemeinsamen Punkt der zwei Strommeßwiderstände verbunden ist, wobei der Emitter mit dem zweiten Leitungsendteil (12) und der Kollektor mit der Gate-Elektrode des ersten Transistors ($T_1$) verbunden ist.

**5.** Schaltungsanordnung nach Anspruch 1 bis 4, _dadurch gekennzeichnet_, daß ein vierter Transistor ($T_4$) an seiner Basis Steuerimpulse erhält zum Öffnen der Schleife der Telefonleitung, wobei der Emitter dieses vierten Transistors mit dem zweiten Leitungsendteil (12) und der Kollektor mit der Gate-Elektrode des ersten Transistors ($T_1$) verbunden ist.

**6.** Schaltungsanordnung nach Anspruch 5, _dadurch gekennzeichnet_, daß das genannte Tiefpaßfilter durch einen zwischen der Bezugsklemme (SL) des integrierten Moduls und der Ausgleichsdiode (D) vorgesehenen Filterwiderstand (22) und durch einen mit einem Ende mit dem gemeinsamen Punkt des Filterwiderstandes und der Ausgleichsdiode verbundenen und mit dem anderen Ende über die Hauptstromstrecke eines fünften, als Schalttransistor bezeichneten Transistors ($T_5$) mit der Bezugsspannung verbundenen Glättungskondensator gebildet ist, wobei dieser Transistor an der Gate-Elektrode die Schleifenöffnungsimpulse erhält, wobei die Polarität dieses Schalttransistors ($T_5$) zur Gewährleistung einer Unterbrechung der Verbindung von dem Glättungskondensator zu der Bezugsspannung, parallel zu der Öffnung der Schleife gewählt worden ist.

## Claims

**1.** Circuit for a telephone set, comprising an integrated voltage gain and control module (10) inserted between a first line end portion(11) and a second line end portion (12), which portions are connected to a diagonal of a rectifier bridge (13) having a telephone line (14, 15) connected to the other diagonal of this bridge, said module having a power supply terminal ($V_{cc}$), a modulation terminal (LN) coupled to the first line end portion (11), and a reference terminal (SL) coupled to the second line end portion (12) which is provided as a reference voltage _via_ at least a line current measuring resistor element (9), said telephone set further ensuring a line current control _via_ a first field effect transistor (T1) and/or high-gain bipolar transistor whose control electrode is fed by a bias resistor (20) in view of the conduction of this transistor and whose main current path, in a series combination with the integrated module 10 in the branch between the first and second line end portions, is susceptible of introducing a voltage drop in this branch under the control of a second transistor (T2) whose base receives the voltage developed on the current measuring resistor element (9) after filtering by a low-pass filter and whose collector is connected to the bias resistor (20) of the first transistor (T1),
characterized in that the second transistor (T2) has its base connected to the output of the low-pass filter (22, 23) _via_ a compensating diode (D) D.C. polarized by a current source (S1) from the power supply terminal ($V_{cc}$), and has its emitter connected to a threshold voltage source (21, S2), (21a, 21b, 30) which is furthermore connected to the reference voltage, the internal impedance of which voltage source is fixed to realize a linear control of the line current as a function of the voltage drop in the first transistor, and in that the second transistor (T2), the compensating diode (D) and the current source (S1) are susceptible of being integrated with the integrated module (10) because the main current path of the first transistor (T1) lies between the first line end portion (11) and the modulation terminal (LN) while the bias resistor (20) is fed from this first line end portion (11).

**2.** Circuit arrangement as claimed in Claim 1, characterized in that the threshold voltage source is constituted by a voltage generator (30) having a low internal impedance, whose output terminals are interconnected by a divider bridge of two resistors (21a, 21b), whereas the point in the middle of this divider bridge constitutes the threshold voltage source output having a specific impedance.

**3.** Circuit arrangement as claimed in Claim 1, characterized in that said threshold voltage source is constituted, on the one hand, by a resistor (21) inserted between the emitter of the second transistor (T2) and the second line end portion (12), and on the other hand, by a current source (S2), termed threshold current source, feeding aforesaid resistor from the supply terminal ($V_{cc}$).

**4.** Circuit arrangement as claimed in one of the Claims 1 to 3, characterized in that the current measuring element is constituted by two series-arranged measuring resistors (9a, 9b), while the base of a third transistor (T3) is connected to the point shared by the two current measuring resistors, its emitter to the second line end portion (12) and its collector to the gate electrode of the first transistor (T1).

5. Circuit arrangement as claimed in one of the Claims 1 to 4, characterized in that a fourth transistor (T4) receives on its base control pulses for opening the loop of the telephone line, while the emitter of this fourth transistor is connected to the second line end portion (12) and its collector is connected to the gate electrode of the first transistor (T1).

6. Circuit arrangement as claimed in Claim 5, characterized in that said low-pass filter which is constituted by a filter resistor (22) inserted between the reference terminal (SL) of the integrated gain and control module and the compensating diode (D), and by a smoothing capacitor (23) whose one end is connected to the point shared by the filter resistor and the compensating diode and whose other end is connected to the reference voltage over the main current path of a fifth transistor (T5), called switching transistor, receiving at its gate electrode the loop-opening control pulses, the polarity of this switching transistor (T5) being chosen to ensure an interruption of the connection from the smoothing capacitor to the reference voltage in parallel with the opening of the loop.

FIG.1

FIG.2